# EUROPÄISCHE PATENTANMELDUNG

(11) **EP 3 093 479 A1**
(43) Veröffentlichungstag der Anmeldung: **16.11.2016**
(21) Anmeldenummer: 15290120.3
(22) Anmeldetag: 30.04.2015
(51) Int. Cl.: F02M 26/00, F02D 9/10, F16K 31/52, F02D 9/02

(54) **ANSAUGLUFTDROSSEL FÜR EINEN VERBRENNUNGSMOTOR UND KOMBIVENTIL**

(71) Anmelder: MANN+HUMMEL GmbH, 71638 Ludwigsburg (DE)
(72) Erfinder: Talmon-Gros, Dietmar, 71720 Oberstenfeld (DE); Marimbordes, Thierry, 53000 Laval (FR); Migaud, Jérôme, 35500 Vitré (FR); Dehnen, Ulrich, 70806 Kornwestheim (DE); Frossard, Quentin, 53000 Laval (FR); Vitard, Cyril, 53410 La Brulatte (FR)

(57) **Zusammenfassung**

Die Erfindung betrifft eine Ansaugluftdrossel für einen Verbrennungsmotor, mit einem Ansauglufteinlass und mit einem Auslass, wobei zwischen dem Ansauglufteinlass und dem Auslass eine zwischen einer Offenposition und einer Stauposition bewegbare Ansaugluftdrosselklappe für die Steuerung eines Druckgefälles eines Fluidstroms von dem Ansauglufteinlass zu dem Auslass angeordnet ist, mit einem Kinematikelement, das in einer ersten Richtung zum Schließen der Ansaugluftdrossel und einer hierzu entgegengesetzten zweiten Richtung zum Öffnen der Ansaugluftdrossel verschiebbar ist und einen Anschlag und einen Mitnehmer aufweist, wobei zwischen den Anschlag und den Mitnehmer ein Abtriebselement zur Bewegung der Ansaugluftdrosselklappe zwischen der Offenposition und der Stauposition eingreift, und eine Rückstellfeder vorgesehen ist, die eine Rückstellkraft auf das Abtriebselement ausübt, derart, dass in einem Normalbetrieb, der dadurch charakterisiert ist, dass die Rückstellkraft der Rückstellfeder einen Bewegungs-widerstand der Ansaugluftdrosselklappe übersteigt, das Abtriebselement mittels der Rückstellkraft der Rückstellfeder an den Anschlag diesen kontaktierend angedrückt wird, und in einem Vereisungs- oder Blockadezustand, der dadurch charakterisiert ist, dass der Bewegungswiderstand der Ansaugluftdrosselklappe die Rückstellkraft der Rückstellfeder übersteigt, bei einer Bewegung des Kinematikelements in der zweiten Richtung das Abtriebselement den Mitnehmer kontaktiert und von diesem den Bewegungswiderstand der Ansaugluftdrosselklappe überwindend durch das Kinematikelement verschiebbar ist.

## Beschreibung

### Technisches Gebiet

Die vorliegende Erfindung betrifft eine Ansaugluftdrossel für einen Verbrennungsmotor, ein Kombiventil mit Niederdruck-Abgasrückführungsventil und Ansaugluftdrossel für einen Verbrennungsmotor.

### Stand der Technik

Um die NOₓ-Emission von Dieselmotoren und den CO₂-Ausstoß von Ottomotoren zu reduzieren, ist es ein Ziel, die Verbrennungstemperatur im Brennraum zu senken. Zu diesem Zweck wird der dem Verbrennungsmotor zugeführten Reinluft Abgas zugegeben. Dies führt im Falle von Dieselmotoren zu einer Absenkung der Reaktionsgeschwindigkeit und damit der Verbrennungstemperatur. Bei Ottomotoren können Ladungswechselverluste vermieden und ebenfalls NOₓ-Emissionen verringert werden. Man unterscheidet bei der Abgasrückführung (AGR) zwischen einer Hochdruck-AGR und einer Niederdruck-AGR. Bei der Hochdruck-AGR erfolgt die Entnahme des Abgases vor der Turbine eines Turboladers. Das entnommene Abgas wird stromabwärts von Verdichter Und Ansaugluftdrossel eingeleitet. Bei der Niederdruck-AGR wird das zu entnehmende Abgas nach der Abgasnachbehandlung entnommen und vor einem Turbolader zugemischt.

Die vorliegende Erfindung befasst sich mit der Niederdruck-AGR. Es ist im Stand der Technik bekannt, ein Niederdruck-AGR-Ventil und eine Ansaugluftdrossel baulich so zu kombinieren, dass beide Steuerelemente zusammen wirken. Wird eine größere Menge an AGR-Gas benötigt, wird die Ansaugluftdrossel schrittweise geschlossen. Das Verringern des wirksamen Querschnitts im Ansaugtrakt durch ein Schließen der Ansaugluftdrossel erzeugt lokal einen partiellen Unterdruck und ermöglicht so eine größere Entnahme bzw. Zuführung von Abgas.

Bei der mechanischen Integration von Niederdruck-Abgasrückführungsventil und Ansaugluftdrossel als Kombiventil sind verschiedene Ansätze im Stand der Technik bekannt. So wird beispielsweise in den Dokumenten DE 10 2010 032 824 A1, DE 10 2011 007 303 A1 und DE 10 2011 053 664 A1 ein Niederdruck-AGR-Einstellventil vorgeschlagen, das über eine Kulissenführung seine Bewegung direkt auf ein Einlassdrosselventil überträgt. Diese Anordnung benötigt wenig Bauraum.

Die genannte Anordnung hat den Nachteil dass bei einem Verklemmen oder Vereisen der Ansaugluftdrossel diese ihre Steuerungsfunktion verliert und zusätzlich das Niederdruck-AGR-Einstellventil blockiert, so dass eine Steuerung der AGR nicht mehr stattfinden kann.

Der vorliegenden Erfindung liegt daher die Aufgabe zugrunde, diesen genannten Nachteil zu mildern oder zu beseitigen.

### Offenbarung der Erfindung

Eine die erfindungsgemäße Aufgabe lösende Ansaugluftdrossel für einen Verbrennungsmotor weist einen Ansauglufteinlass und einen Auslass auf, wobei zwischen dem Ansauglufteinlass und dem Auslass eine zwischen einer Offenposition und einer Stauposition bewegbare Ansaugluftdrosselklappe für die Steuerung eines Druckgefälles eines Fluidstroms von dem Ansauglufteinlass zu dem Auslass angeordnet ist, ferner ein Kinematikelement, das in einer ersten Richtung zum Schließen der Ansaugluftdrossel und einer hierzu entgegengesetzten zweiten Richtung zum Öffnen der Ansaugluftdrossel verschiebbar ist und einen Anschlag und einen Mitnehmer aufweist, wobei zwischen den Anschlag und den Mitnehmer ein Abtriebselement zur Bewegung der Ansaugluftdrosselklappe zwischen der Offenposition und der Stauposition eingreift, und eine Rückstellfeder vorgesehen ist, die eine Rückstellkraft auf das Abtriebselement ausübt, derart, dass in einem Normalbetrieb, der dadurch charakterisiert ist, dass die Rückstellkraft der Rückstellfeder einen Bewegungswiderstand der Ansaugluftdrosselklappe übersteigt, das Abtriebselement mittels der Rückstellkraft der Rückstellfeder an den Anschlag diesen kontaktierend angedrückt wird, und in einem Vereisungs- oder Blockadezustand, der dadurch charakterisiert ist, dass der Bewegungswiderstand der Ansaugluftdrosselklappe die Rückstellkraft der Rückstellfeder übersteigt, bei einer Bewegung des Kinematikelements in der zweiten Richtung das Abtriebselement den Mitnehmer kontaktiert und von diesem den Bewegungswiderstand der Ansaugluftdrosselklappe überwindend durch das Kinematikelement verschiebbar ist.

Ein die erfindungsgemäße Aufgabe lösendes Kombiventil mit Niederdruck-Abgasrückführungsventil und Ansaugluftdrossel für einen Verbrennungsmotor weist einen Abgaseinlass, einen Ansauglufteinlass sowie einen Auslass auf. Zwischen dem Abgaseinlass und dem Auslass ist das Niederdruck-Abgasrückführungsventil angeordnet. Zwischen dem Ansauglufteinlass und dem Auslass ist die Ansaugluftdrosselklappe angeordnet. Erfindungsgemäß weist das Kombiventil ein Kinematikelement auf, das gemeinsam das Niederdruck-Abgasrückführungsventil und die Ansaugluftdrossel betätigt. Das Kinematikelement weist einen Käfig, einen Anschlag und einen Mitnehmer auf. In den Käfig greift ein Antriebselement, insbesondere eine Antriebkurbel zur Bewegung des Kinematikelements sowie des Niederdruck-Abgasrückführungsventils ein. Zwischen den Anschlag und den Mitnehmer greift ein Abtriebselement zur Bewegung der Ansaugluftdrossel ein. Diese Ausgestaltung ermöglicht zum einen eine gleichzeitige Bewegung des Niederdruck-Abgasrückführungsventils und der Ansaugluftdrossel mittels des Kinematikelements. Gleichzeitig bietet die kinematische Ausgestaltung von Anschlag und Mitnehmer die Möglichkeit, ein eventuelles Festsitzen der Ansaugluftdrossel beispielsweise durch Vereisung zu beseitigen. Bei einer geeigneten Wahl zwischen Anschlag und Mitnehmer kann das Kinematikelement gleichsam "Anlauf" nehmen und die festsitzende Ansaugluftdrossel losbrechen.

Gemäß einer Ausgestaltung der Erfindung ist das Kinematikelement entlang einer Längsachse bewegbar.

Die Erfindung sieht vor, dass eine Rückstellfeder vorgesehen ist, die im Normalbetrieb eine Rückstellkraft auf das Abtriebselement ausübt, wobei das Abtriebselement die Rückstellkraft auf den Anschlag überträgt. Die Rückstellfeder wirkt vorteilhaft derart, dass im Normalbetrieb ein permanenter Kontakt zwischen dem Anschlag und dem Abtriebselement vorliegt.

Eine vorteilhafte Ausgestaltung der Erfindung sieht vor, dass bei einer Bewegung des Kinematikelements in einer ersten Richtung, die vorteilhaft einer Öffnungsrichtung des Niederdruck-Abgasrückführungsventils entspricht, der Anschlag das Abtriebselement gegen die Rückstellkraft mitnimmt. Es wird also eine Bewegung des Kinematikelements über den Anschlag auf das Abtriebselement übertragen.

Weiterhin ist vorgesehen, dass bei einer Bewegung des Kinematikelements in einer zweiten Richtung, die vorteilhaft einer Schließrichtung des Niederdruck-Abgasrückführungsventil entspricht, das Abtriebselement mittels der Rückstellkraft dem Anschlag folgt. Dies ist im Normalbetrieb der Fall, wenn die Rückstellkraft groß genug für eine Überwindung des Bewegungswiderstands ist, der beispielsweise aufgrund von Reibung durch das Abtriebselement und die Ansaugluftdrosselklappe hervorgerufen wird.

Bei einer vorteilhaften Ausführungsform der Erfindung ist vorgesehen, dass bei einer Bewegung des Kinematikelements in der zweiten Richtung im Vereisungs- oder Blockadezustand zwischen dem Verlassen des Anschlags und dem Kontaktieren des Mitnehmers ein Leerhub stattfindet.

Durch diesen Leerhub kann eine festsitzende Ansaugluftdrossel angestoßen und ggf. gelöst werden. Mittels des Leerhubs kann das Kinematikelement zunächst in Bewegung versetzt werden und mittels der der Bewegung innewohnenden Trägheit über den Mitnehmer einen Stoß auf die Ansaugluftdrossel ausüben.

Bei einer vorteilhaften Ausführungsform kann vorgesehen sein, dass Mitnehmer und Anschlag eine Gabel- oder käfigförmige Struktur bilden.

### Kurze Beschreibung der Zeichnungen

Es wird nun die Erfindung anhand der beigefügten Zeichnungen erläutert. Es zeigen:
- Figur 1: eine perspektivische Teilansicht einer erfindungsgemäßen Ausführungsform eines Kombiventils;
- Figur 2: eine perspektivische Ansicht eines Kinematikelements des in Figur 1 gezeigten Kombiventils;
- Figur 3: eine weitere perspektivische Ansicht des Kinematikelements der Figur 2;
- Figur 4: eine perspektivische Ansicht einer alternativen Ausführungsform eines Kinematikelements der Figur 2 in einer ersten Stellung;
- Figur 5: das Kinematikelement der Figur 4 in einer zweiten Stellung;
- Figur 6: eine perspektivische Ansicht einer alternativen Ausführungsform einer Ansaugluftdrosselklappe, insbesondere für ein Kombiventil;
- Figur 7: die Ansaugluftdrosselklappe der Figur 6 in einer beispielhaften Ausführungsform eine Ansaugluftdrossel;
- Figur 8: die Ansaugluftdrosselklappe der Figur 6 in einer beispielhaften Ausführungsform eines Kombiventils;
- Figur 9: die beispielhafte Ausführungsform des Kombiventils der Figur 8 mit einer anderen Stellung der Ansaugluftdrosselklappe;
- Figur 10: eine perspektivische Ansicht des Kombiventils der Figur 8 mit der Ansaugluftdrosselklappe in einer Stauposition;
- Figur 11: die Ansicht der Figur 10 mit der Ansaugluftdrosselklappe in einer Offenposition;
- Figur 12: eine erste perspektivische Ansicht eines erfindungsgemäßen Kombiventils in einer seitlichen Aufrissdarstellung;
- Figur 13: eine zweite perspektivische Ansicht des Kombiventils der Figur 12.

### Ausführungsform(en) der Erfindung

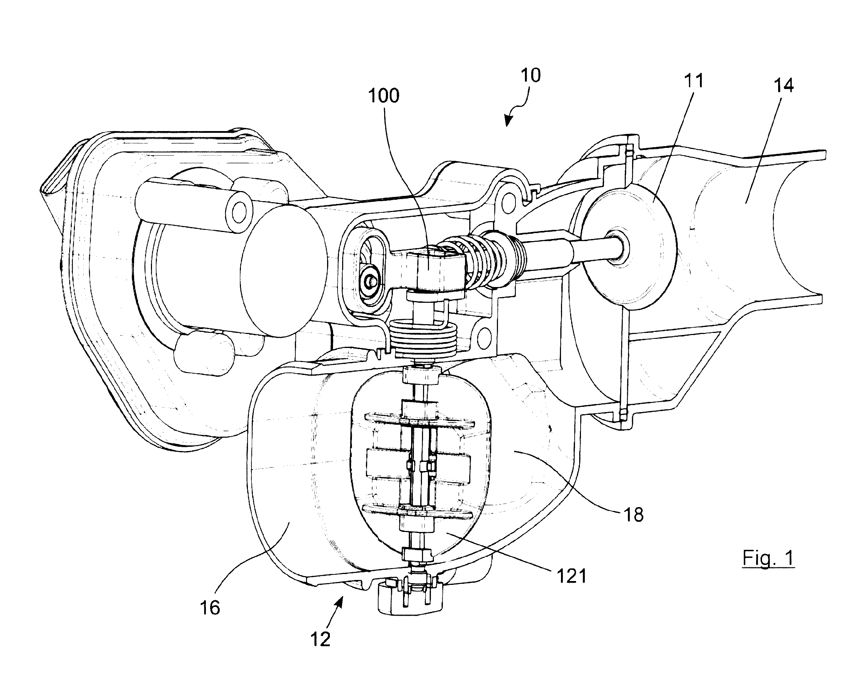

Figur 1 zeigt ein Kombiventil 10. Bei der Darstellung wurden Teile des Gehäuses und der Luftkanäle weggelassen, um die Funktionalität besser darstellen zu können. Das Kombiventil 10 weist ein Niederdruck-Abgasrückführungsventil 11 und eine Ansaugluftdrossel 12 auf.

Das Niederdruck-Abgasrückführungsventil 11 ist in einem Abgaseinlass 14 angeordnet. Der Abgaseinlass 14 kann beispielsweise mit dem der Turbine eines Turboladers nachgeordneten Abgastrakt verbunden sein. Beispielsweise wird die Niederdruck-Abgasluft bei einem Dieselmotor nach dem Dieselpartikelfilter entnommen und vorzugsweise noch durch einen Niederdruck-Abgasrückführungs-Kühler zur Reduzierung der Abgastemperatur geleitet. Das Niederdruck-Abgasrückführungsventil 11 ist in der in Figur 1 gezeigten Ausführungsform als linear bewegliches Tellerventil ausgeführt. In der gezeigten Stellung befindet sich der Ventilteller im Ventilsitz und verschließt so den Abgaseinlass 14.

Die Ansaugluftdrossel 12 weist eine in einem Ansaugluftkanal mit einem Ansauglufteinlass 16 angeordnete Ansaugluftdrosselklappe 121 auf, beispielsweise im Ansauglufttrakt einem Luftfilter (nicht dargestellt) nachgeordnet. Bei einer Betätigung der Ansaugluftdrossel 12 verändert sich die Winkelstellung der Ansaugluftdrosselklappe 121 innerhalb des Ansaugluftkanals und verringert so den wirksamen Querschnitt innerhalb des Ansaugluftkanals. Es entsteht ein partielles Druckgefälle vom Ansauglufteinlass 16 zum Auslass 18. Dies erhöht wiederum den Zustrom von Abgas über den Abgaseinlass 14. Im Auslass 18 trifft das zugeführte Abgas auf die Ansaugluft. Es schließt sich in der Regel ein AGR-Mischer an. Dort wird das zugeführte Abgas mit der Ansaugluft gemischt.

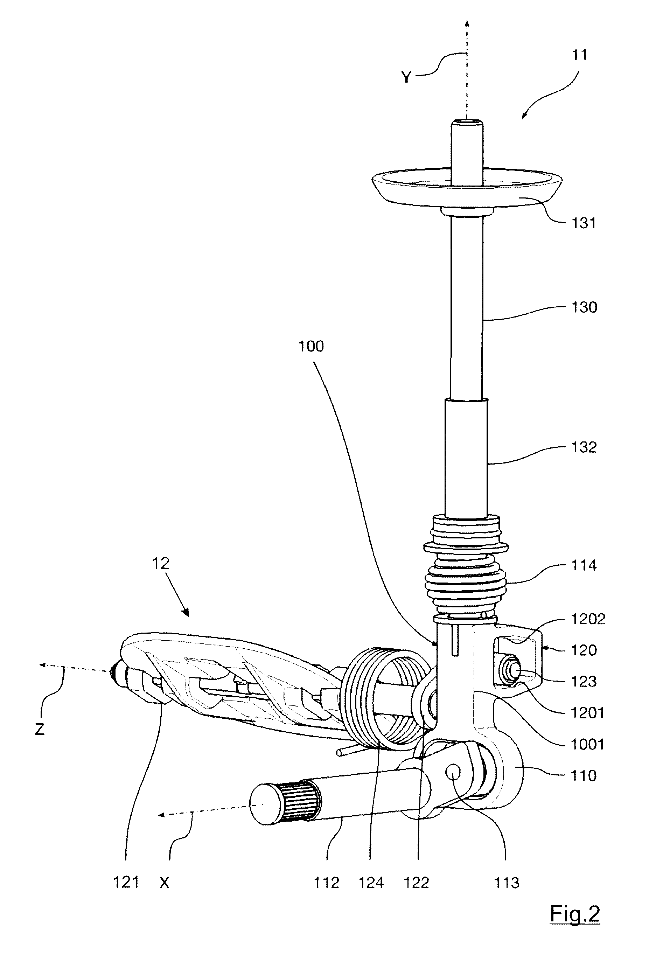

Figur 2 zeigt das Kinematikelement 100 mit Teilen von Ansaugluftdrossel 12 und Niederdruck-Abgasrückführungsventil 11.

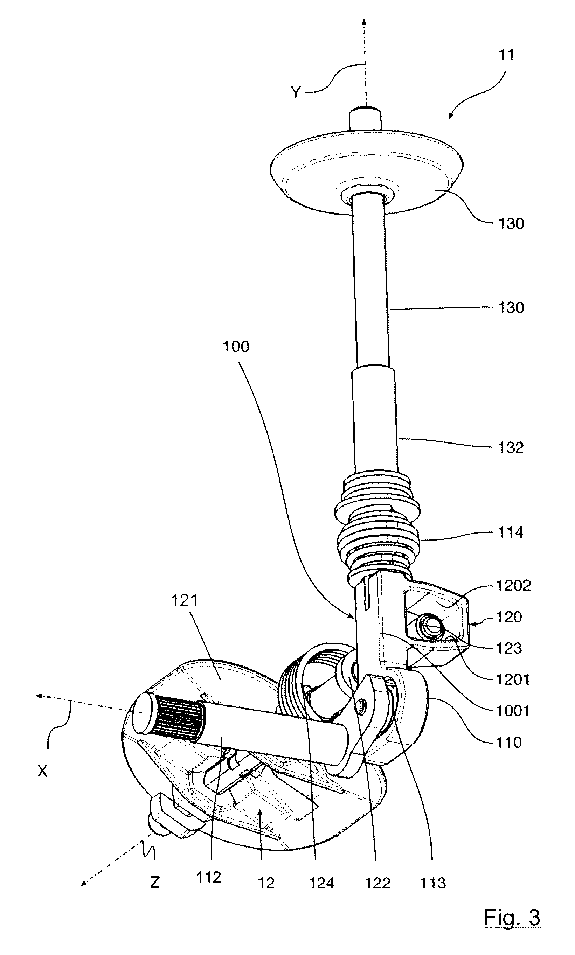

Das Kinematikelement 100 weist einen Grundkörper 1001 auf, der sich im Wesentlichen entlang einer Achse Y als langgestreckter Quader erstreckt. An einem stirnseitigen Ende des in Y-Richtung langgestreckten Quaders ist ein erster Käfig 110 angebracht. Die Innenseite des ersten Käfigs 110 besitzt im Wesentlichen die Form eines Langlochs, dessen schmale Seiten durch Kreise abgeschlossen sind und deren Durchmesser der Breite des Langlochs entsprechen. Die Längsseiten des Langlochs verlaufen im Wesentlichen parallel zueinander. Senkrecht zu der Ausdehnungsebene des ersten Käfigs 110 erstreckt sich der zweite Käfig 120, im Wesentlichen entlang einer Achse X. Der zweite Käfig 120 besitzt im Inneren eine im Wesentlichen quaderförmige Geometrie. An der dem Grundkörper 1001 des Kinematikelements 100 abgewandten Seite des Käfigs 120 verjüngt sich die Geometrie. Dies ist beispielsweise in Figur 3 gut erkennbar.

Die Käfige 110, 120 sind im Wesentlichen im 90° Winkel zueinander angeordnet. Dies bedingt, dass die in die Käfige 110, 120 eingreifenden Kurbeln in ihrer Bewegungsebene ebenfalls um 90° versetzt sind.

In den ersten Käfig 110 greift ein Antriebszapfen 113 einer Antriebskurbel 112 ein. Der Antriebszapfen 113 ist mittels einer Kugellagerung gelagert. Der Durchmesser des Antriebszapfens 113 mit Kugellagerung entspricht im Wesentlichen der Breite des Langlochs des Käfigs 110. Die Antriebskurbel 112 dreht sich um eine Achse X und wird beispielsweise durch einen Motor (nicht dargestellt) angetrieben. Bei der Rotation der Antriebskurbel 112 um die Achse X beschreibt der Antriebszapfen 113 eine Kreissegmentbahn. Dabei bewegt sich der Antriebszapfen 113 innerhalb des Käfigs 110 zwischen zwei Endpositionen und bewegt dabei das Kinematikelement 100 linear entlang der Achse Y. Dabei ist kein oder wenig Spiel des Antriebszapfens 113 in Richtung der Achse Y vorgesehen.

Die Ansaugluftdrosselklappe 121 ist um eine Achse Z drehbar gelagert und weist eine Abtriebskurbel 122 auf. Ein Abtriebszapfen 123 der Abtriebskurbel 122 greift in den zweiten Käfig 120 ein. Bei der linearen Bewegung des Kinematikelements 100 versetzt der zweite Käfig 120 die Abtriebskurbel 122 in eine Drehung um die Achse Z und bewegt damit die Ansaugluftdrossel 12 bzw. deren Ansaugluftdrosselklappe 121. Die Abtriebskurbel 122 ist mit einer Drehfeder 124 gekoppelt. Die hier beispielhaft als zylindrische Torsionsfeder ausgebildete Drehfeder 124 übt eine Drehkraft auf die Abtriebskurbel 122 dergestalt aus, dass der Abtriebszapfen 123 an dem zweiten Käfig 120 anliegt. In Figur 2 ist eine Stellung gezeigt, in der der Abtriebszapfen 123 an einem ersten Abschnitt 1201 des zweiten Käfigs 120 anliegt. Der erste Abschnitt 1201 ist der entlang der Achse Y in Richtung des ersten Käfigs 110 gelegene Abschnitt 1201 des zweiten Käfigs 120.

Das Niederdruck-Abgasrückführungsventil 11 weist eine Ventilstange 130 auf, an deren von dem Kinematikelement 100 wegweisenden Ende ein Ventilteller 131 vorgesehen ist. Die Ventilstange 130 ist innerhalb einer Hülse 132 verschiebbar gelagert. Die Hülse 132 ist ortsfest relativ zu dem Kinematikelement 100 angeordnet und dient als Führung für die Ventilstange 130. An dem Ende der Ventilstange 130, das dem Kinematikelement 100 zugewandt ist, befindet sich ein Anschlag für eine Druckfeder 114. Die Druckfeder 114 ist konzentrisch zur Achse Y und zur Ventilstange 130 angeordnet. Die Druckfeder 114 ist hier beispielhaft als sphärische Druckfeder ausgeführt, um einen geringen Bauraumbedarf und eine leichte Herstellbarkeit zu ermöglichen. Die Druckfeder 114 übt eine Federkraft auf die Ventilstange 130 und damit auch auf den Ventilteller 131 entlang der Achse Y in Richtung des Kinematikelements 100 aus und drückt somit den Ventilteller 131 in Richtung eines Ventilsitzes. Ventilstange 130 und Ventilteller 131 folgen somit einer Bewegung des Kinematikelements 100 entlang der Achse Y unmittelbar.

Die in Figur 2 und 3 gezeigte Stellung des Kinematikelements 100 entspricht einer weiten Öffnung des Niederdruck-Abgasrückführungsventils 11 und einer relativ stark geschlossenen Stellung der Ansaugluftdrossel 12.

Sowohl die Druckfeder 114 als auch die Drehfeder 124 wirken gleichgerichtet auf das Kinematikelement 100 und üben eine Kraft aus, die es entlang der Achse Y in Richtung Antriebskurbel 112 drückt. Die Druckfeder 114 stützt sich dabei an der Hülse 132 ab. Die Drehfeder 124 stützt sich an einem nicht gezeigten Gehäuseabschnitt ab. Das Vorsehen zweier unabhängiger Federkräfte, die auf zwei verschiedene kinematische Wege auf das Kinematikelement 100 einwirken, stellt ein Sicherheitsmerkmal dar. Des Weiteren erlaubt diese Anordnung eine deutliche Reduzierung des Bewegungsspiels und reduziert die Toleranzkette innerhalb der Anordnung substantiell.

Bei einer Bewegung des Kinematikelements 100 entlang der Achse Y in Richtung der Antriebskurbel 112 folgt der Abtriebszapfen 123 dem zweiten Käfig 120 und liegt dabei an dem ersten Abschnitt 1201 an, da die Drehfeder 124 eine entsprechende Kraft auf die Abtriebskurbel 122 ausübt. Folglich bewegt sich die Ansaugluftdrossel 12 in Richtung ihrer Offenstellung. Gleichzeitig drückt die Druckfeder 114 die Ventilstange 130 entlang der Achse Y in Richtung der Antriebskurbel 112. Der Ventilteller 131 des Niederdruck-Abgasrückführungsventils 11 bewegt sich folglich in Richtung seiner Schließstellung.

Ist aufgrund bestimmter Umstände die Ansaugluftdrossel 12 verklemmt - beispielsweise durch eine Vereisung oder eine hohe thermische Belastung - hebt sich bei einer derartigen beschriebenen Bewegung des Kinematikelements 100 entlang der Achse Y in Richtung der Antriebskurbel 112 der Abtriebszapfen 123 von dem ersten Abschnitt 1201 des zweiten Käfigs 120 ab und wird bei fortgesetzter Bewegung des Kinematikelements 100 von dem zweiten Abschnitt 1202 mitgenommen. Dieser Leerhub ermöglicht ein Beschleunigen der gesamten mit dem Kinematikelement 100 bewegten Masse, so dass beim Auftreffen des Abtriebszapfens 123 auf den zweiten Abschnitt 1202 des zweiten Käfigs 120 ein gewisser Bewegungsimpulsübertrag stattfindet und so ein Losbrechen aus der Vereisungs- bzw. Verklemmungsposition der Ansaugluftdrossel 12 stattfinden kann. Es ist somit möglich, über die Antriebskurbel 112 eine beträchtliche Losbrechkraft auf die Ansaugluftdrossel 12 auszuüben.

Des Weiteren kann vorgesehen sein, dass bevor das Kinematikelement 100 seinen unteren Endpunkt der Bewegung erreicht, bereits die Endstellung der Ansaugluftdrossel 12 erreicht wird. Dies kann beispielsweise durch einen Anschlag für ein bewegliches Teil der Ansaugluftdrossel 12 erreicht werden. Setzt das Kinematikelement 100 dann seine Bewegung fort, hebt sich ebenfalls der Abtriebszapfen 123 von dem ersten Abschnitt 1201 ab. Der sich so ergebende Leerhub kann dazu benutzt werden, dass bei dem Öffnen des Niederdruck-Abgasrückführventils 11 aus seiner Schließstellung zunächst die Ansaugluftdrossel 12 in ihrer Offenstellung verharrt. Erst nach Beendigung des Leerhubs kontaktiert der Abtriebszapfen 123 den zweiten Käfig 120 an seinem ersten Abschnitt 1201 und leitet damit den Schließvorgang der Ansaugluftdrossel 12 ein.

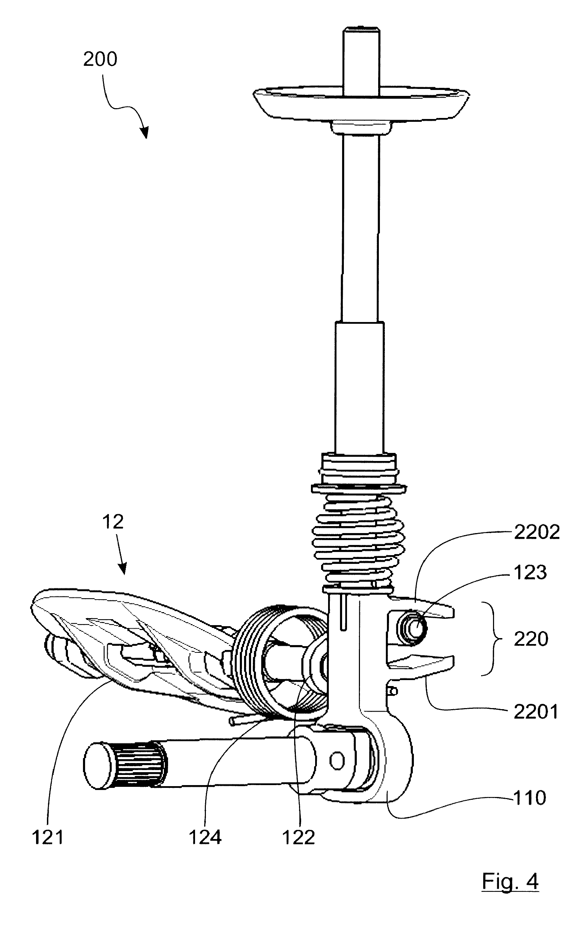

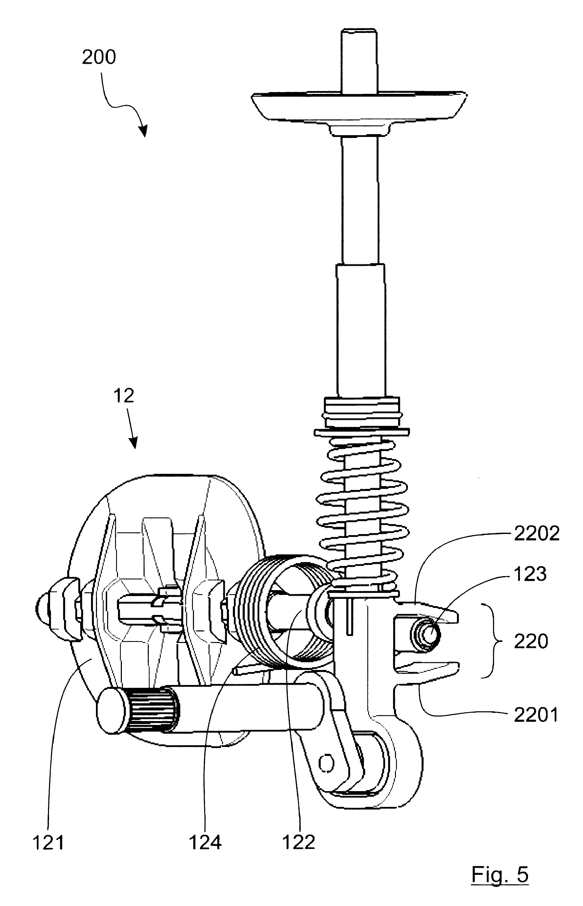

Im Unterschied zu der in den Figuren 1-3 gezeigten Ausführungsform zeigen die Figuren 4 und 5 eine alternative Ausführungsform eines Kinematikelements 200. Die grundlegende Ausgestaltung ist identisch zu dem des Kinematikelements 100, so dass eine Beschreibung des Aufbaus nicht wiederholt werden muss, sondern auf die entsprechenden Ausführungen zu dem Kinematikelement 100 verwiesen wird. Im Unterschied zu dem Kinematikelement 100 weist das Kinematikelement 200 keinen geschlossenen Käfig 120 auf. Stattdessen ist eine Anschlag-Mitnehmer-Struktur 220 vorgesehen. Ein Anschlag 2201 ist hinsichtlich der Bewegungsachse Y des Kinematikelements 200 gegenüber einem Mitnehmer 2202 angeordnet. Zwischen Anschlag 2201 und Mitnehmer 2202 greift ein Abtriebszapfen 123 der Abtriebskurbel 122 der Ansaugluftdrossel 12 ein. Bei der linearen Bewegung des Kinematikelements 200 entlang der Bewegungsachse Y wird die Antriebskurbel 122 in eine Drehung um die Achse Z versetzt und die Ansaugluftdrossel 12 bzw. deren Ansaugluftdrosselklappe 121 bewegt. Wie bereits oben zu den Figuren 2 und 3 erläutert, übt eine Drehfeder 124 eine Kraft auf die Abtriebskurbel 122 aus, so dass bei der vorliegenden Ausführungsform des Kinematikelements 200 die Abtriebskurbel 122 bzw. der Abtriebszapfen 123 an dem Anschlag 2201 anliegt.

In Figuren 4 und 5 ist der Fall gezeigt, dass die durch die Drehfeder 124 aufgebrachte Rückstellkraft nicht ausreicht, um die Ansaugluftdrossel 12 so zu bewegen, dass der Abtriebszapfen 123 an dem Anschlag 2201 anliegt. Dies kann beispielsweise bei einem Vereisen der Ansaugluftdrossel 12, bei einem Verklemmen oder bei einem Bruch der Drehfeder 124 auftreten. Bei der in Figur 4 gezeigten Stellung hat das Kinematikelement 200 bereits die zwischen dem Anschlag 2201 und dem Mitnehmer 2202 für den Abtriebszapfen 123 mögliche Wegstrecke zurückgelegt, also den Leerhub ausgeführt. Der Mitnehmer 2202 trifft also in Figur 4 nach einem "Schwungholen" auf den starr mit der Ansaugluftdrossel 12 verbundenen Abtriebszapfen 123 und reißt diesen mit, so dass das Kinematikelement 200 die in der Figur 5 gezeigte Stellung einnimmt. Während in Figur 4 die Ansaugluftdrossel 12 in einer geschlossenen Stellung beispielsweise vereist war, ist die Ansaugluftdrossel 12 - wie in Figur 5 gezeigt - nach diesem Bewegungsvorgang in ihre weitgehend geöffnete Stellung mittels des Mitnehmers 2202 überführt worden, obwohl die Rückstellkraft der Drehfeder 124 nicht ausreichend war, um den Abtriebszapfen 123 an dem Anschlag 2201 anzulegen. Diese Funktionalität ist sowohl mit einem geschlossenen Käfig 120, wie er in Figuren 2 und 3 gezeigt ist, als auch mit der offenen Anschlag-Mitnehmer-Struktur 220 möglich, wie sie das Kinematikelement 200 der Figuren 4 und 5 zeigt.

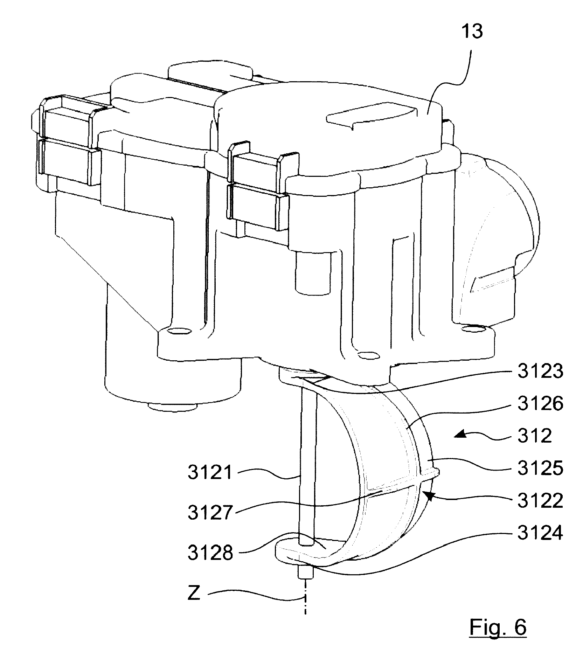

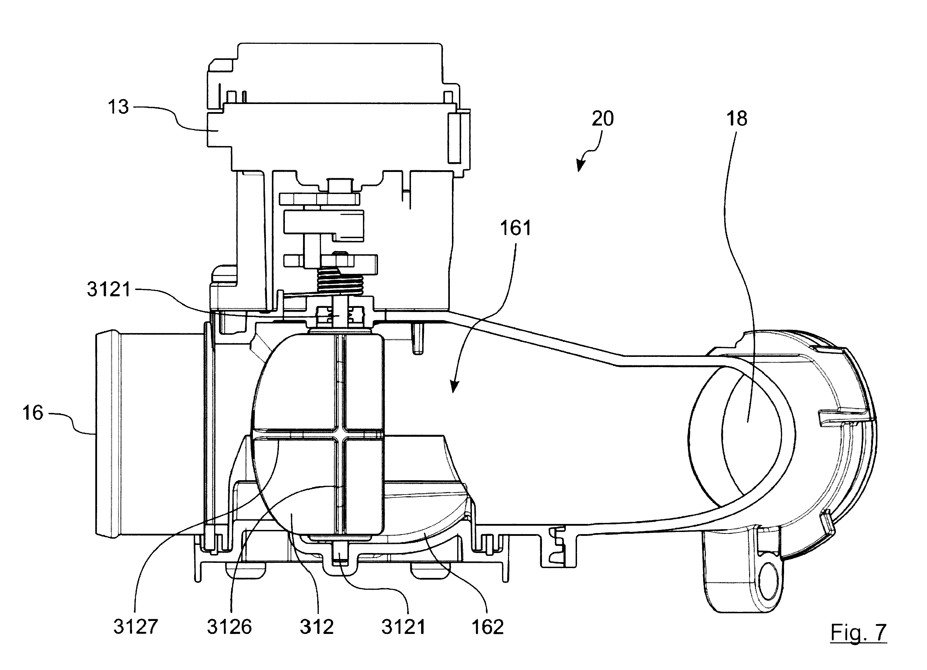

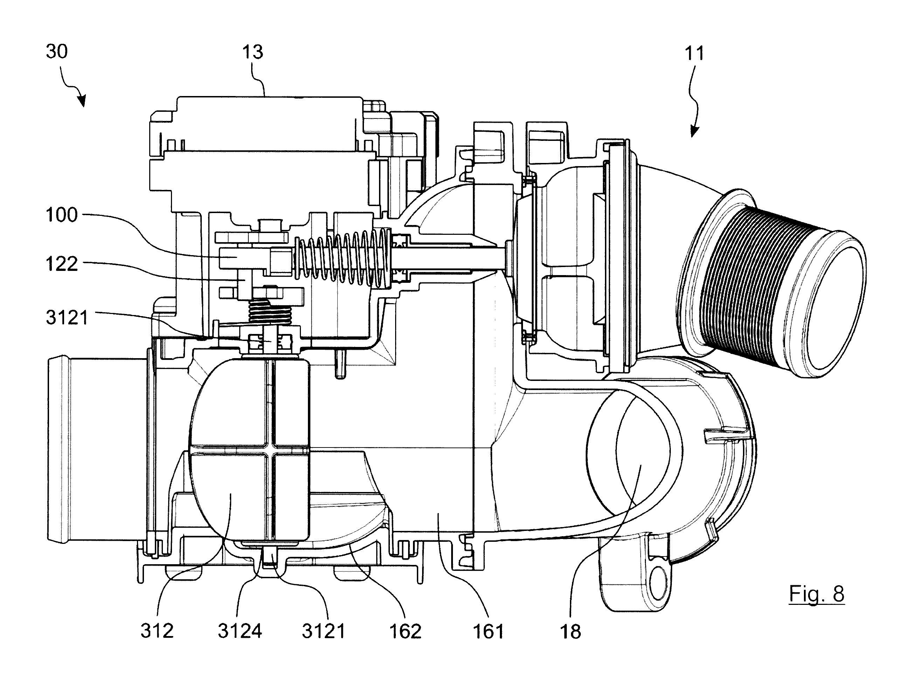

Figur 6 zeigt eine perspektivische Ansicht einer erfindungsgemäßen Ansaugluftdrosselklappe 312. In Figur 7 ist die Ansaugluftdrosselklappe 312 in einer beispielhaften Ausführungsform einer Ansaugluftdrossel 20, in Figur 8 in einer beispielhaften Ausführungsform eines Kombiventils 30 integriert. In der Darstellung der Figur 6 wurden luftführende Kanäle weggelassen, um die Form der Ansaugluftdrosselklappe 312 besser darstellen zu können. In den Figuren 7-14 sind ebenfalls Teile des Gehäuses und Teile der Luftkanäle weggelassen, um die Funktionalität darstellen zu können.

Es wird zunächst auf die Ansaugluftdrosselklappe 312, gezeigt in Figur 6, der Ansaugluftdrossel 20 der Figur 7 eingegangen. Die entsprechenden Ausführungen gelten aber auch für das Kombiventil 30, wie es in Figuren 8-11 gezeigt ist. Insbesondere gelten auch für das Kombiventil 30 der Figuren 8-11 die Ausführungen zu den Ausführungsformen der Figuren 1-6. Es werden entsprechend auch für gleiche oder vergleichbare Merkmale gleiche Bezugszeichen verwendet und eine Wiederholung der Beschreibung weitgehend vermieden.

Die Ansaugluftdrossel 20 weist einen Ansauglufteinlasskanal 16 und einen Auslass 18 auf und ist beispielsweise im Ansauglufttrakt nach einem Luftfilter (nicht dargestellt) angeordnet. Die Ansaugluftdrosselklappe 312 weist eine Drosselklappenwelle 3121 auf, die mit einer Staufläche 3122 der Ansaugluftdrosselklappe 312 an einer in den Figuren 6-11 oberen Befestigungsstelle 3123 und einer unteren Befestigungsstelle 3124 verbunden ist. Die Drosselklappenwelle 3121 ist in den Figuren 6-11 um eine Achse Z drehbar gelagert und wird von einem Antrieb 13 angetrieben. Die dem luftstromabgewandte Außenfläche 3125 der Ansaugluftdrosselklappe 312 weist eine parallel zur Achse Z verlaufende erste Rippe 3126 sowie eine senkrecht zu der Achse Z verlaufende zweite Rippe 3127 auf. Die Grundform der Staufläche 3122 ist komplex. Die dem Luftstrom zugewandte Innenfläche 3128 ist konvex, entspricht teilweise einer Zylinderform und teilweise einer Kalottenform. Während im Bereich der zweiten Rippe 3127 die Staufläche 3122 im Wesentlichen kugel- bzw. kalottenförmig ausgebildet ist, verläuft die Staufläche 3122 im Bereich der Befestigungsstellen 3123, 3124 im Wesentlichen parallel zueinander und in den Figuren 6-11 waagerecht. Der waagerechte Querschnitt der Ansaugluftdrosselklappe 312 ist an den Befestigungsstellen 3123, 3124 vergleichsweise klein, während er im Bereich der waagerechten zweiten Rippe 3127 am größten ist.

In Figur 7 ist die Ansaugluftdrosselklappe 312 in eine Ansaugluftdrossel 20 integriert, in den Figuren 8-11 ist die Ansaugluftdrosselklappe 312 in ein Kombiventil 30 integriert gezeigt. In den Figuren 7 und 8 ist die Innenfläche 161 des Ansaugluftkanals, der den Ansauglufteinlass 16 aufweist, teilweise aufgerissen gezeigt. Es ist in den Figuren 7 und 8 gut zu erkennen, dass sich die Ansaugluftdrosselklappe 312 in einer Kavität 162 des Ansaugluftkanals befindet. Gleichzeitig befindet sich auch die Lagerung der Ansaugluftdrosselklappe 312 im Bereich der unteren Befestigungsstelle 3124 in der Kavität 162. Die Welle 3121 der Ansaugluftdrosselklappe 312 wird im Falle des Kombiventils 30 durch eine Abtriebskurbel 122 eines Kinematikelements 100 bzw. 200 angetrieben, wie dies bereits weiter oben erläutert wurde. Im Falle einer Ansaugluftdrossel 20 kann die Welle 3121 direkt durch den Antrieb 13 angetrieben sein. Aufgrund der Tatsache, dass die Ansaugluftdrosselklappe 312 lediglich die Hälfte des Innenumfangs des Ansaugluftkanals überdeckt, ist das Risiko einer Vereisung verringert. Des Weiteren ist die senkrecht verlaufende erste Rippe 3126 in der Offenstellung der Ansaugluftdrosselklappe 312 die maßgebliche Stelle, an der eine Vereisung mit der Innenfläche 161 des Strömungskanals stattfinden kann. Im Vergleich zur Gesamtfläche der Ansaugluftdrosselklappe 312 ist diese Fläche klein und damit das Losbrechmoment ebenfalls deutlich kleiner als bei herkömmlichen Drosselklappengeometrien.

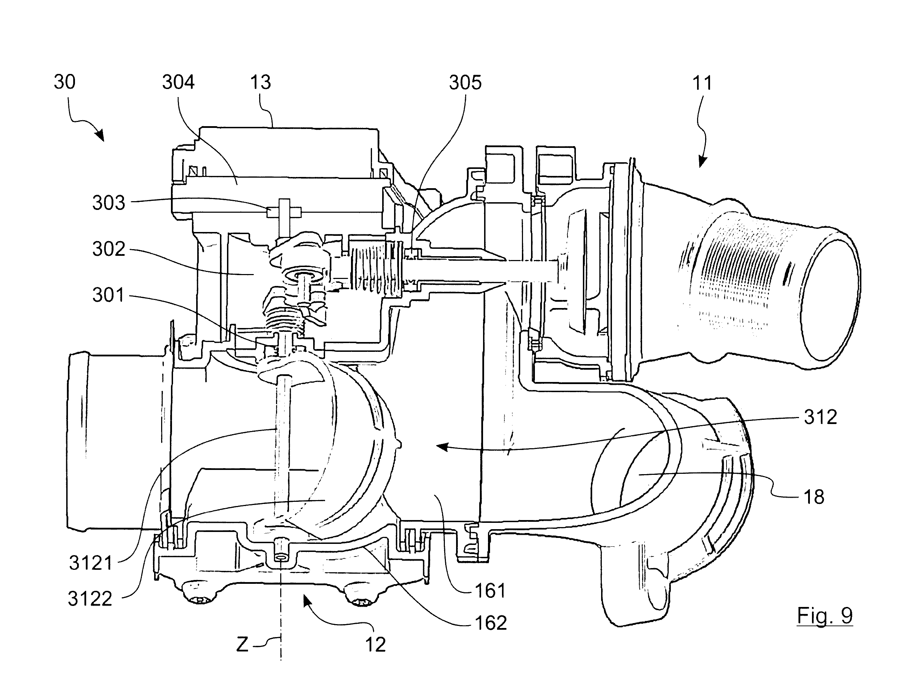

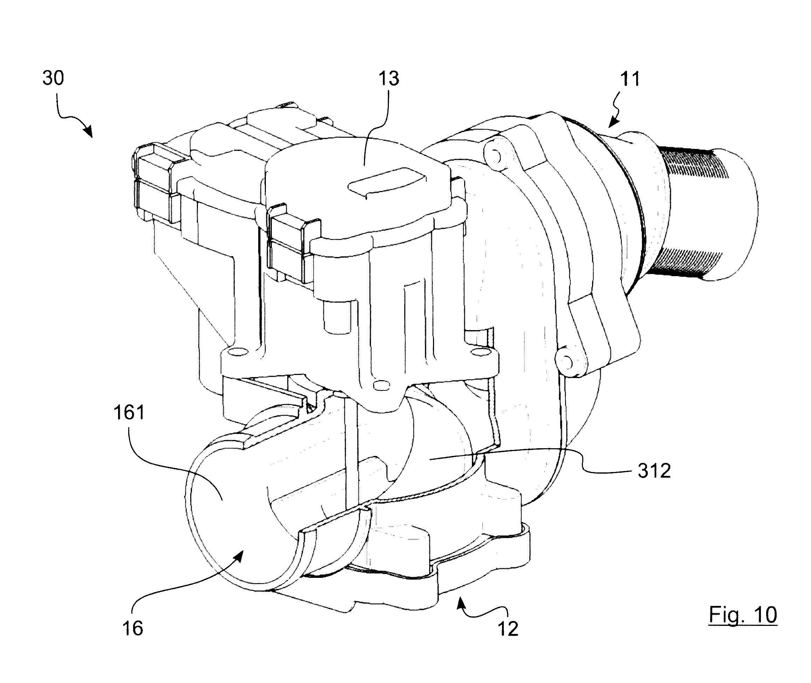

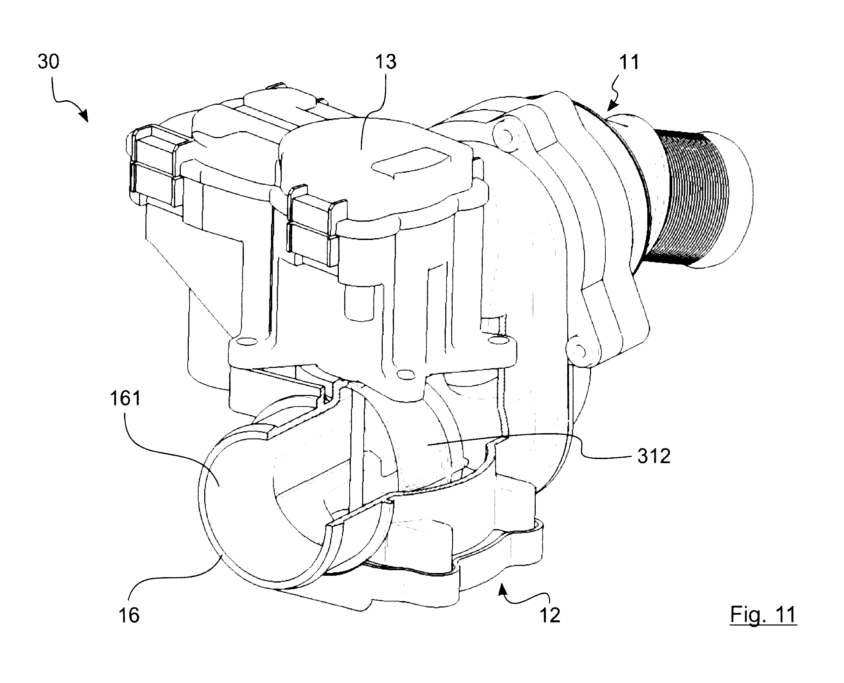

Während in Figur 8 die Ansaugluftdrosselklappe 312 in der Offenstellung gezeigt ist, befindet sie sich in Figur 9 in einer teilweise geschlossenen Stauposition. Die Figuren 10 und 11 zeigen die Stauposition (Figur 10) und die Offenposition (Figur 11) aus einer anderen Perspektive. Aufgrund der an die Innengeometrie des Ansaugluftkanals angepassten Form der Ansaugluftdrosselklappe 312 ergibt sich in der Offenposition der Figur 11 ein besonders niedriger Druckverlust, da lediglich die Welle 3121 in den Luftstrom ragt. Alle anderen Teile der Ansaugluftdrosselklappe 312, wie Lager oder die Staufläche 3122 selbst befinden sich in der Kavität 162 und damit außerhalb des Luftstroms.

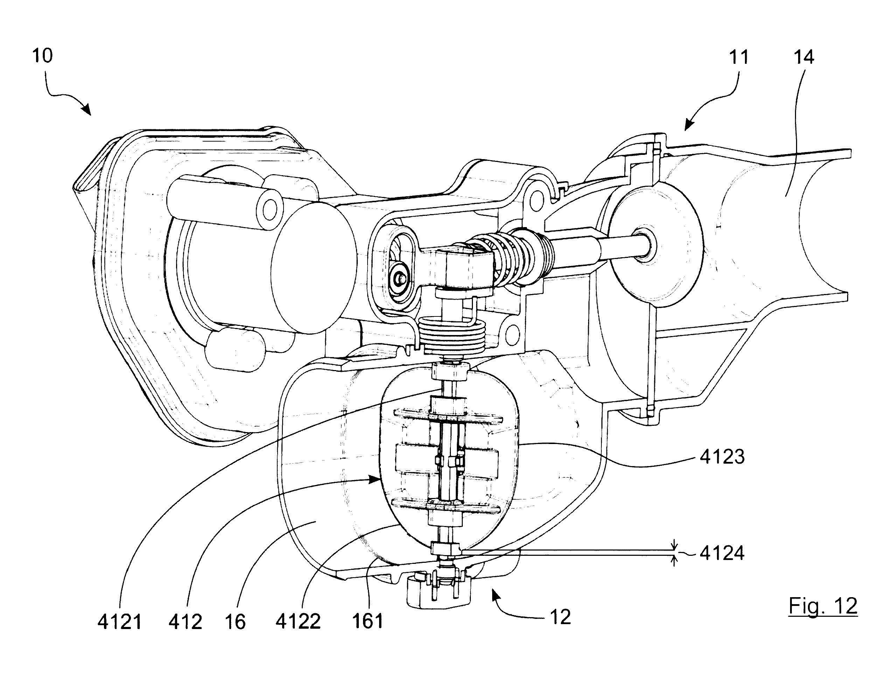

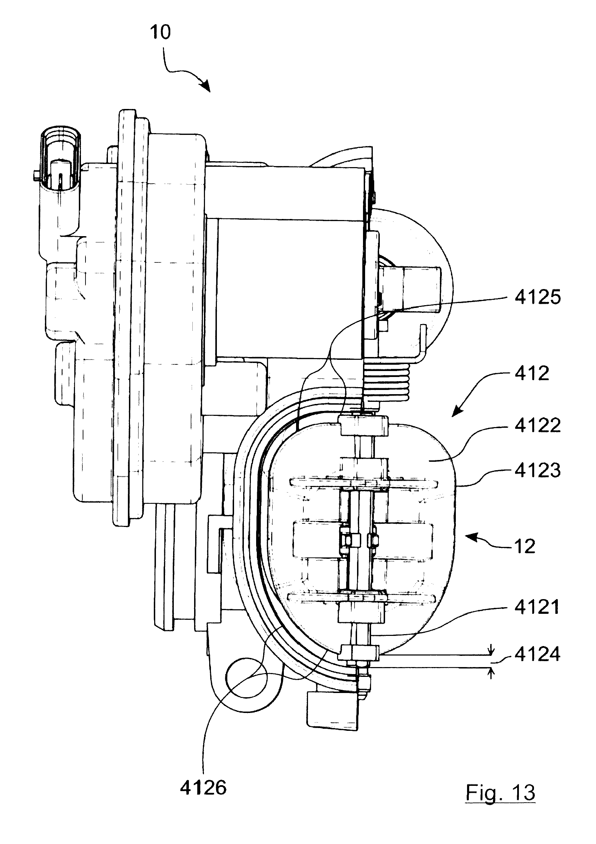

Figuren 12 und 13 zeigen zwei perspektivische Ansichten eines erfindungsgemäßen Kombiventils 10. Der generelle Aufbau des Kombiventils 10 entspricht dem der zu den
Figuren 1 und 8-11 beschriebenen Kombiventile. Gleiche oder vergleichbare Merkmale werden deshalb mit gleichen Bezugszeichen bezeichnet. Es werden zur Vermeidung von Wiederholungen lediglich die Teile des Kombiventils 10 beschrieben, die für die vorliegende Erfindung relevant sind. Bei der Darstellung des Kombiventils 10 wurden Teile des Gehäuses und der Luftkanäle weggelassen, um die Funktionalität besser darstellen zu können.

Das Kombiventil 10 weist ein Niederdruck-Abgasrückführungsventil 11 und eine Ansaugluftdrossel 12 auf. Das Niederdruck-Abgasrückführungsventil 11 ist in einem Abgaseinlasskanal 14 des Kombiventils 10 angeordnet. Die Ansaugluftdrossel 12 ist in einem Ansauglufteinlasskanal mit einem Ansauglufteinlass 16 des Kombiventils 10 angeordnet. Der Ansauglufteinlasskanal ist entlang seiner Durchströmungsrichtung geschnitten dargestellt. Die Ansaugluftdrossel 12 weist eine Ansaugluftdrosselklappe 412 auf. Die Ansaugluftdrosselklappe 412 weist eine Drosselklappenwelle 4121 sowie eine Staufläche 4122 auf. Die Staufläche 4122 ist um die Längsachse Z der Drosselklappenwelle 4121 drehbar. Bei einer Betätigung der Ansaugluftdrosselklappe 412 verändert sich ihre Winkelstellung in dem Ansauglufteinlasskanal. Die in den Figuren 12 und 13 gezeigte Stellung entspricht einer Schließ- oder Staustellung, in der die Ansaugluftdrosselklappe 412 einen maximalen Staudruck in dem Ansauglufteinlasskanal erzeugt. Bei einer um 90° um die Längsachse Z gedrehten Stellung der Staufläche 4122 befindet sich die Ansaugluftdrosselklappe 412 in der Offenstellung und der erzeugte Staudruck ist minimal.

Der Umfang 4123 der Ansaugluftdrosselklappe 412 ist in seiner Geometrie der Geometrie der Innenfläche 161 des Ansauglufteinlasskanals angepasst. Zwischen der Innenfläche 161 und dem Umfang 4123 der Ansaugluftdrosselklappe 412 ist ein Spalt 4124 vorgesehen. Dabei kann bei bestimmten Ausführungsformen, wie in Figur 13 verdeutlicht, der Spalt nicht über dem gesamten Umfang 4123 der Ansaugluftdrosselklappe 412 gleichmäßig breit ausgebildet sein. In einem oberen Bereich 4125 und in einem unteren Bereich 4126 ist der Spalt besonders breit, während er in einem Zwischenbereich deutlich kleiner ausgebildet ist. Eine solche Aufteilung der Spaltbreiten ist besonders dann sinnvoll, wenn das Kombiventil eine bevorzugte Stellung einnimmt, in der eine Eisbildung zu befürchten ist. Nach der Benetzung der Staufläche 4122 und der Innenfläche 161 bilden sich einzelne Tropfen, die sich der Gravitation folgend an der Unterseite in dem Bereich 4126 sammeln werden. Folglich ist es zu erwarten, dass sich dort bevorzugt oder eine besonders große Menge Kondenswasser sammeln und im Falle einer Temperatur unter dem Gefrierpunkt zu Eis erstarren wird. Ist in einem solchen Fall der Spalt an der Unterseite 4126 besonders groß, wird dies ein Losbrechen der Staufläche 4122 von der Innenfläche 161 erleichtern, im günstigen Falle bildet sich kein die beiden Oberflächen verbindender gemeinsamer Eiskörper und die Staufläche 4122 bleibt frei beweglich. Die Asymmetrie der Spaltgeometrie kann wie dargestellt im Verlauf von oben nach unten realisiert sein. Alternativ kann auch eine Links-RechtsAsymmetrie oder andere freie Ausgestaltungen der Spaltgeometrie gewählt werden, falls andere äußere Einflüsse eine Eisbildung an anderen Stellen besonders wahrscheinlich erscheinen lässt.

Dieses Prinzip einer Spaltausbildung zwischen der Ansaugluftdrosselklappe und der Innenwand bzw. der Innenfläche des umgebenden Luftkanals kann selbstverständlich auch mit der alternativen Ausführungsform der Klappenform der Figuren 6-11 oder/und mit der Ausgestaltung der Kinematikelemente 100, 200 zur besonders günstigen Kraftübertragung für ein Losbrechen der Ansaugluftdrosselklappe im Klemm-/Vereisungsfall vorteilhaft kombiniert werden.

Die in den Figuren 8 und 9 gezeigte Ausführungsform eines Kombiventils 30 weist ein zweistufiges Dichtungskonzept mit mindestens drei dynamischen Dichtungen auf.

Eine erste Dichtung 301 befindet sich zwischen dem Ansauglufteinlasskanal und einem Kinematikraum 302.

In dem Kinematikraum 302 sind die beweglichen Elemente angeordnet, die zur Ansteuerung des Niederdruck-Abgasrückführungsventils 11 und der Ansaugluftdrossel 12 vorgesehen sind. Insbesondere sind in dem Kinematikraum 302 ein Kinematikelement 100, 200, eine Antriebskurbel 122 zur Betätigung einer Ansaugluftdrosselklappe 121, 312, 412, eine Antriebskurbel 112 zur Bewegung des Kinematikelements 100, 200 angeordnet, wie sie in den vorhergehend beschriebenen Figuren exemplarisch dargestellt sind.

Die erste Dichtung 301 ist eine Wellendichtung zur Abdichtung des Kinematikraums 302 gegen den Ansauglufteinlass 16 bzw. den Strömungsraum zwischen dem Ansauglufteinlass 16 und dem Auslass 18 und ist insbesondere an der Drosselklappenwelle 3121, die zur Bewegung der Staufläche 3122 der Ansaugluftdrosselklappe 312 dient, angebracht.

Eine zweite Dichtung 303 dichtet den Kinematikraum 302 gegen den Aktuatorraum 304, in welchem der Antrieb 13 angeordnet ist, ab.

Eine dritte Dichtung 305 dichtet ebenfalls den Kinematikraum 302 ab, jedoch gegen den Bereich des Niederdruck-Abgasrückführungsventils 11. Je nach Ausführung des Betätigungselements des Niederdruck-Abgasrückführungsventils 11 kann eine Wellendichtung oder eine Stangendichtung vorgesehen sein. Bei einer Ausbildung der dritten Dichtung 305 als Stangendichtung kann diese selbst zweistufig ausgebildet sein und aus einer Spaltdichtung und einer Stangendichtung aufgebaut sein. Zwischen Spaltdichtung und Stangendichtung kann die Lagerung der Stange angeordnet sein.

## Patentansprüche

1. Ansaugluftdrossel (12, 20) für einen Verbrennungsmotor, mit einem Ansauglufteinlass (16) und mit einem Auslass (18), wobei zwischen dem Ansauglufteinlass (16) und dem Auslass (18) eine zwischen einer Offenposition und einer Stauposition bewegbare Ansaugluftdrosselklappe (121, 312, 412) für die Steuerung eines Druckgefälles eines Fluidstroms von dem Ansauglufteinlass (16) zu dem Auslass (18) angeordnet ist, mit einem Kinematikelement (100, 200), das in einer ersten Richtung zum Schließen der Ansaugluftdrossel (12) und einer hierzu entgegengesetzten zweiten Richtung zum Öffnen der Ansaugluftdrossel (12) verschiebbar ist und einen Anschlag (1201, 2201) und einen Mitnehmer (1202, 2202) aufweist, wobei zwischen dem Anschlag (1201, 2201) und dem Mitnehmer (1202, 2202) ein Abtriebselement zur Bewegung der Ansaugluftdrosselklappe (121, 312, 412) zwischen der Offenposition und der Stauposition eingreift, und eine Rückstellfeder vorgesehen ist, die eine Rückstellkraft auf das Abtriebselement ausübt, derart, dass in einem Normalbetrieb, der dadurch charakterisiert ist, dass die Rückstellkraft der Rückstellfeder einen Bewegungswiderstand der Ansaugluftdrosselklappe (121, 312, 412) übersteigt, das Abtriebselement mittels der Rückstellkraft der Rückstellfeder an den Anschlag (1201, 2201) diesen kontaktierend angedrückt wird, und in einem Vereisungs- oder Blockadezustand, der dadurch charakterisiert ist, dass der Bewegungswiderstand der Ansaugluftdrosselklappe (121, 312, 412) die Rückstellkraft der Rückstellfeder übersteigt, bei einer Bewegung des Kinematikelements (100, 200) in der zweiten Richtung das Abtriebselement den Mitnehmer (1202, 2202) kontaktiert und von diesem den Bewegungswiderstand der Ansaugluftdrosselklappe (121, 312, 412) überwindend durch das Kinematikelement (100, 200) verschiebbar ist.

2. Ansaugluftdrossel (12, 20) nach Anspruch 1, wobei das Kinematikelement (100, 200) entlang einer Längsachse bewegbar ist.

3. Ansaugluftdrossel (12, 20) nach einem der Ansprüche 1 oder 2, wobei das Abtriebselement derart zwischen dem Anschlag (1201, 2201) und dem Mitnehmer (1202, 2202) positioniert ist, dass bei einer Bewegung des Kinematikelements (100, 200) in der ersten Richtung der Anschlag (1201, 2201) das Abtriebselement gegen die Rückstellkraft der Rückstellfeder mitnimmt.

4. Ansaugluftdrossel (12, 20) nach einem der Ansprüche 1 bis 3, wobei das Abtriebselement derart zwischen dem Anschlag (1201, 2201) und dem Mitnehmer (1202, 2202) positioniert ist, dass bei einer Bewegung des Kinematikelements (100, 200) in der zweiten Richtung im Normalbetrieb das Abtriebselement mittels der Rückstellkraft dem Anschlag (1201, 2201) diesen kontaktierend folgt.

5. Ansaugluftdrossel (12, 20) nach Anspruch 4, wobei das Abtriebselement derart zwischen dem Anschlag (1201, 2201) und dem Mitnehmer (1202, 2202) positioniert ist, dass bei einer Bewegung des Kinematikelements (100, 200) in der zweiten Richtung im Vereisungs- oder Blockadezustand zwischen dem Verlassen des Anschlags (1201, 2201) und dem Kontaktieren des Mitnehmers (1202, 2202) ein Leerhub stattfindet.

6. Ansaugluftdrossel (12, 20) nach einem der vorhergehenden Ansprüche, wobei Mitnehmer (1202, 2202) und Anschlag (1201, 2201) eine gabelförmige Struktur oder Käfig (120) bilden.

7. Ansaugluftdrossel (12, 20) nach einem der vorhergehenden Ansprüche, wobei das Abtriebselement als Abtriebskurbel (122) zur Umsetzung einer Schiebebewegung insbesondere linearen Schiebebewegung des Kinematikelements (100, 200) in eine Drehbewegung der Ansaugluftdrosselklappe (121, 312, 412) ausgeführt ist.

8. Kombiventil (10, 30) mit Niederdruck-Abgasrückführungsventil (11) und der Ansaugluftdrossel (12, 20) gemäß einem der Ansprüche 1 bis 7, mit einem Abgaseinlass (14), wobei zwischen dem Abgaseinlass (14) und dem Auslass (18) das Niederdruck-Abgasrückführungsventil (11) angeordnet ist, wobei das Kinematikelement (100, 200) gemeinsam das Niederdruck-Abgasrückführungsventil (11) und die Ansaugluftdrossel (12, 20) betätigt, wobei das Kinematikelement (100, 200) ferner einen Käfig (110) aufweist, wobei in den Käfig (110) ein Antriebselement zur Bewegung des Kinematikelements (100, 200) sowie des Niederdruck-Abgasrückführungsventils (11) eingreift.

9. Kombiventil (10, 30) nach Anspruch 8, **dadurch gekennzeichnet, dass** das Antriebselement als Antriebskurbel (112) zur Umsetzung einer Drehbewegung des Antriebselements in eine insbesondere lineare Schiebebewegung des Kinematikelements (100, 200) ausgeführt ist.

10. Kombiventil (10, 30) nach einem der Ansprüche 8 oder 9, wobei eine erste Rückstellfeder und eine zweite Rückstellfeder vorgesehen sind, die voneinander unabhängig eine Rückstellkraft auf das Kinematikelement (100, 200) ausüben, und die erste Rückstellfeder so eingerichtet ist, dass sie unmittelbar auf das Kinematikelement (100, 200) wirkt und die zweite Rückstellfeder so eingerichtet ist, dass sie über das Abtriebselement mittelbar auf das Kinematikelement (100, 200) wirkt.

11. Kombiventil (10, 30) nach einem der Ansprüche 8 bis 10, wobei die erste Richtung des Kinematikelements (100, 200) einer Öffnungsrichtung des NiederdruckAbgasrückführungsventils (11) entspricht, und die zweite Richtung des Kinematikelements (100, 200) einer Schließrichtung des Niederdruck-Abgasrückführungsventils (11) entspricht.
